# FASCICULE DE BREVET EUROPEEN

(11) **EP 2 773 861 B1**
(45) Date de publication et mention de la délivrance du brevet: **18.11.2015**
(21) Numéro de dépôt: 12781394.7
(22) Date de dépôt: 15.10.2012
(51) Int. Cl.: F02K 1/72, F02K 1/76

(54) **INVERSEUR DE POUSSÉE À GRILLES MOBILES ET CAPOT MOBILE MONOBLOC**
SCHUBUMKEHRVORRICHTUNG MIT EINTEILIGER MOBILER HAUBE
CASCADE-TYPE THRUST REVERSER WITH ONE-PIECE MOBILE COWL

(30) Priorité: 31.10.2011 FR 1159867
(43) Date de publication de la demande: 10.09.2014
(73) Titulaire: Aircelle, 76700 Gonfreville L'Orcher (FR)
(72) Inventeur: CARUEL, Pierre, F-76600 Le Havre (FR)
(74) Mandataire: Gaillarde, Frédéric F. Ch.
(86) Numéro de dépôt international: PCT/FR2012/052340
(87) Numéro de publication internationale: WO 2013/064762

(56) Documents cités:
- EP-A2- 2 138 697
- FR-A1- 2 911 372
- FR-A1- 2 952 681
- FR-A1- 2 952 908
- US-A- 5 778 659

## Description

La présente invention se rapporte à un inverseur de poussée pour nacelle de turboréacteur. L'invention concerne également une nacelle pour turboréacteur intégrant un inverseur de poussée selon l'invention.

Un avion est mû par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en amont du turboréacteur, une section médiane destinée à entourer une soufflante du turboréacteur, une section aval intégrant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (flux primaire) et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de l'air éjecté du turboréacteur. Dans cette phase, l'inverseur obstrue au moins une partie de la veine du flux froid et dirige ce flux vers l'avant de la nacelle, générant de ce fait une contre-poussée qui vient s'ajouter au freinage des roues de l'avion.

Une structure commune d'inverseur de poussée comprend un capotage dans lequel est ménagé une ouverture destinée au flux dévié qui, en fonctionnement en jet direct de la nacelle, est fermée par un capot externe et qui, en fonctionnement jet inverse de la nacelle, est dégagée par déplacement en translation vers l'aval (par référence au sens d'écoulement des gaz) du capot externe, au moyen de vérins de déplacement du capot externe, lesdits vérins de déplacement étant montés sur un cadre du capotage en amont de l'ouverture.

Le capot externe est le plus souvent formé de deux demi-capots, de forme sensiblement hémicylindrique, qui sont articulés en partie supérieure (position dite à 12 heures) sur des charnières sensiblement parallèles à la direction de translation du capot externe, et qui sont fermés par des verrous en partie inférieure (position dite à 6 heures).

Cette disposition permet, pour des opérations de maintenance, d'accéder à l'intérieur de la nacelle, et notamment au turboréacteur ou à une structure interne de l'inverseur en ouvrant ces demi-capots.

Afin de résoudre certains problèmes liés à une telle ouverture en « papillon », une solution d'ouverture en translation a été développée et est notamment décrite dans la demande FR 2 911 372. Ladite demande décrit une structure d'inversion de poussée comprenant un ensemble externe en une seule partie, c'est-à-dire sans fermeture en partie inférieure. Une telle structure est appelée structure monobloc ou structure en O.

La demande de brevet FR 2 952 681 décrit également une structure en O comprenant un inverseur de poussée à grilles fixes en fonctionnement de la nacelle en jet direct ou en jet inverse, et dont l'ensemble constitué par le capot externe et les grilles se translate lors d'opérations de maintenance, permettant un accès plus aisé au moteur. Les grilles de déviation sont reliées au carter de soufflante par leur cadre avant et la déconnexion du cadre avant du carter de soufflante est nécessaire lorsque l'on souhaite atteindre le moteur lors d'opérations de maintenance.

Des inconvénients associés à ces solutions résident dans la complexité du système de déconnexion entre le cadre avant des grilles et le carter de soufflante. En effet, la déconnexion des grilles fixées au carter de soufflante est compliquée manuellement à cause d'un accès au système de déconnexion restreint. D'autre part, un tel système d'ouverture pour les opérations de maintenance nécessite un système d'ouverture distinct de celui utilisé pour ouvrir le capot externe lors d'un fonctionnement en jet inverse de la nacelle, ce qui augmente considérablement le poids de la nacelle et va à l'encontre de la résolution du problème de réduction de poids, récurrent en aéronautique.

Par ailleurs, un autre problème récurrent lié aux nacelles pour turboréacteur est que les dimensions de la nacelle et du capot associé sont trop importantes, conduisant à des augmentations de traînée.

En effet, la longueur des grilles nécessaire à la déviation de flux est déterminée par le débit d'air du flux froid. Du fait de contraintes aérodynamiques, elles occupent également un certain volume à l'intérieur du capot d'inverseur, ce qui peut générer des dimensions importantes du capot d'inverseur et de la nacelle.

Il existe ainsi un besoin de limiter les dimensions du capot et de la nacelle et, par conséquent, de réduire la masse et la traînée de cette dernière.

Une solution à ce problème consiste à concevoir des inverseurs de poussée à grilles mobiles dans lesquels les grilles sont logées entre le carter et le capot de soufflante lors d'un fonctionnement en jet direct de la nacelle, et se translatant avec le capot externe lors d'un fonctionnement en jet inverse de ladite nacelle. Ceci permet, de manière connue, de réduire la longueur axiale de la nacelle et du capot associé, entraînant ainsi une réduction du poids et de la traînée.

Un but de l'invention est de proposer une nacelle pour turboréacteur présentant à la fois les avantages liés aux nacelles dites courtes et ceux liés à la configuration monobloc du capot externe.

Un autre but de l'invention est de réaliser une nacelle courte munie d'un capot externe monobloc, pour laquelle le passage d'une position de fonctionnement à une position de maintenance est facile à réaliser.

A cet effet, l'invention propose un inverseur de poussée pour nacelle de turboréacteur comprenant :
- au moins un capot externe mobile en translation depuis une position dite de fermeture vers au moins une position dite d'ouverture,
- des moyens d'actionnement comprenant un ensemble de vérins de commande dont l'extrémité d'au moins un vérin est solidaire du capot externe,
- des moyens d'inversion de poussée comprenant au moins des grilles de déviation supportées en leur extrémité amont par un cadre amont et en leur extrémité aval par un cadre aval, et renfermées dans une enveloppe formée par un carter de soufflante et par un capot de soufflante,
- des moyens de fixation desdites grilles de déviation sur le capot externe, lesdits moyens pouvant être verrouillés/ déverrouillés,
ledit inverseur de poussée étant remarquable en ce que l'activation des moyens d'actionnement entraîne l'ouverture/ fermeture du capot externe, permettant un déplacement de concert du capot externe et des grilles de déviation lorsque les moyens de fixation sont verrouillés, et un déplacement du seul capot externe lorsque les moyens de fixation sont déverrouillés.

Grâce à la présente invention, un unique ensemble d'actionneurs permet au capot de se translater depuis une position de fermeture correspondant à un fonctionnement de la nacelle en jet direct, vers au moins une position d'ouverture correspondant soit à un fonctionnement de la nacelle en jet inverse, soit à une position de maintenance de ladite nacelle.

Les grilles de déviation étant solidaires du capot externe grâce aux moyens de fixation verrouillés, lesdites grilles coulissent soit par rapport au mât réacteur, soit par rapport au carter de soufflante, de concert avec ledit capot, lors de l'activation des moyens d'actionnement, ayant alors pour effet de découvrir les grilles de leur enveloppe, et par conséquent de dévier au moins une partie d'un flux d'air traversant une veine de la nacelle.

Lors d'une opération de maintenance, les moyens de fixation sont déverrouillés manuellement, ce qui permet de désolidariser les grilles de déviation du capot externe. Grâce à cette manipulation facile à réaliser, l'activation des moyens d'actionnement permet alors un déplacement du capot externe seulement, dans une position telle que l'accès au moteur est simplifié.

Selon l'invention, l'ensemble de vérins de commande est activé par une source de commande unique.

Grâce à cette disposition, on s'affranchit de l'utilisation de différentes sources de commande, selon que la nacelle se trouve en position de fonctionnement ou en position de maintenance. Ceci permet en outre de réduire le poids de la nacelle, objectif récurrent en aéronautique.

Par ailleurs, l'ensemble de vérins de commande comprend au moins un vérin dit supérieur et au moins un vérin dit inférieur.

Selon une caractéristique de l'invention, au moins les vérins supérieurs sont connectés par une de leurs extrémités à la face amont du capot externe.

Selon une autre caractéristique de l'invention, les vérins supérieurs et les vérins inférieurs sont connectés par une de leurs extrémités à la face amont du capot externe.

De par cette disposition, l'ensemble de vérins participe à l'ouverture du capot externe.

Alternativement et avantageusement, les vérins inférieurs sont connectés par une de leurs extrémités au cadre arrière des grilles de déviation.

Les vérins inférieurs sont aptes à être découplés de la source de commande grâce à un dispositif d'embrayage.

De par ces caractéristiques, les vérins inférieurs sont aptes à être temporairement déconnectés de la source de commande grâce au système d'embrayage, ce qui permet, lors d'opérations de maintenance de la nacelle par exemple, et ce sans désactiver manuellement les vérins inférieurs, de procéder lors de l'activation des moyens d'actionnement à la seule ouverture des vérins supérieurs.

Cette disposition est avantageuse en position de maintenance de la nacelle, notamment afin d'améliorer l'accès au moteur.

D'après une caractéristique de l'invention, les moyens de fixation comprennent au moins un verrou solidaire du capot externe et au moins un organe récepteur desdits verrous, solidaire des grilles de déviation.

Les verrous sont fermés lorsque la nacelle est en fonctionnement, et sont ouverts manuellement lors d'opérations de maintenance de la nacelle.

Les grilles de déviation sont, par l'intermédiaire de verrous de sécurité, solidaires d'au moins un ensemble fixe de la nacelle et/ou de l'interface de liaison avec le mât réacteur auquel est destinée à être rattachée ladite nacelle.

Cette disposition constitue une ligne de défense, permettant de sécuriser le maintien des grilles d'inversion de poussée à un ensemble fixe de la nacelle constitué par l'entrée d'air de la nacelle ou le carter de soufflante par exemple. Ce maintien est nécessaire pour une utilisation de la nacelle en jet direct, pour ne pas que les grilles se découvrent de manière involontaire. Par ailleurs, grâce à l'invention, ces lignes de défense n'ont pas besoin d'être déconnectées lors de l'ouverture du capot externe pour des opérations de maintenance, ledit capot étant désolidarisé des grilles de déviation par ouverture des moyens de fixation.

Enfin, des butées axiales sont fixées entre le cadre avant des grilles de déviation et l'ensemble fixe de la nacelle.

De façon avantageuse, lors d'un fonctionnement en jet inverse de la nacelle, les efforts axiaux induits par les grilles de déviation, les volets et le capot externe sont transmis directement aux ensembles fixes de la nacelle sans passer par les vérins, et peuvent ainsi être mieux répartis angulairement de façon à limiter les concentrations de contraintes dans la structure.

L'invention concerne aussi une nacelle pour turboréacteur d'aéronef comprenant au moins un inverseur de poussée selon l'invention.

D'autres caractéristiques, buts et avantages de la présente invention, apparaîtront à la lecture de la description détaillée qui va suivre, selon les modes de réalisation donnés à titre d'exemples non limitatifs, et en référence aux dessins annexés sur lesquels :
- la figure 1 représente de façon schématique une nacelle de turboréacteur selon l'invention, en fonctionnement jet direct ;
- la figure 2 est une vue en coupe de la nacelle selon la figure 1, centrée sur les sections médiane et aval de ladite nacelle ;
- la figure 3 est une vue en coupe de la nacelle, en fonctionnement jet inverse ;
- la figure 4 illustre schématiquement la fixation entre les grilles de déviation et le capot externe ;
- les figures 5a et 5b représentent la fixation du cadre arrière des grilles de déviation et le capot externe, respectivement en position verrouillée et déverrouillée ;
- la figure 6 illustre la nacelle en mode de fonctionnement, en jet direct, centrée sur les moyens d'actionnement ;
- les figures 7 et 8 représentent de façon schématique les verrous de sécurité des grilles de déviation ;
- la figure 9 est une vue de la nacelle lors d'opérations de maintenance, l'ouverture du capot externe étant réalisée selon un premier mode de réalisation ;
- la figure 10 est une vue similaire à celle de la figure 10, l'ouverture du capot externe étant cette fois effectuée selon un second mode de réalisation ;
- la figure 11 représente le dispositif d'embrayage entre les vérins inférieurs et supérieurs équipant la nacelle selon l'invention ;
- la figure 12 illustre la position d'une butée axiale entre le cadre avant de grilles et le carter de soufflante.

Sur l'ensemble des figures, des références identiques ou analogues désignent des organes ou ensembles d'organes identiques ou analogues.

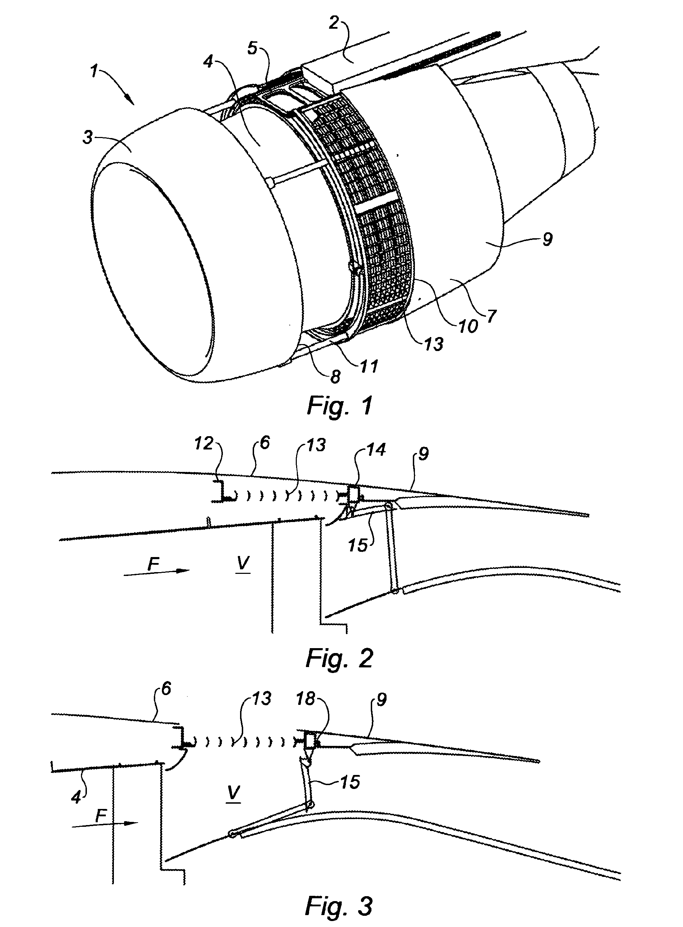

La figure 1 est une représentation schématique générale d'une nacelle 1 de turboréacteur (non représenté) suspendue sous une aile (non représentée) par l'intermédiaire d'un îlot 2 destiné à servir d'interface de liaison avec un mât réacteur (non représenté).

Cette nacelle 1 se subdivise classiquement en une section amont d'entrée d'air 3, une section médiane 5 comprenant un capot de soufflante (non visible), une soufflante (non visible) du turboréacteur et son carter 4, et une section aval 7 abritant un dispositif d'inversion de poussée renfermé dans un capot externe 9, et éventuellement une section de tuyère terminale.

Les sections amont 3 et médiane 5 de la nacelle 1 constituent un ensemble fixe de la nacelle, tandis que la section aval 7 constitue un ensemble mobile de la nacelle.

La nacelle représentée possède une section aval dite en « O », c'est-à-dire que le capot externe 9 est formé par un capot « monobloc ». On entend par capot « monobloc » un capot de forme quasi-annulaire, s'étendant d'un côté à l'autre du mât réacteur sans interruption. Un tel capot est souvent désigné par les termes anglo-saxons « O-duct », par allusion à la forme de virole d'un tel capot, par opposition au « D-duct », qui comprend en fait deux demi-capots s'étendant chacun sur une demi-circonférence de la nacelle.

Sur la figure 1, la nacelle est représentée en fonctionnement jet direct. Le dispositif d'inversion de poussée est en position fermée, c'est-à-dire que le capot externe 9 de la section aval 7 est dans une position dite de fermeture. Lors d'un tel fonctionnement de la nacelle 1, le flux d'air froid F traverse la veine V, formée par le carénage du turboréacteur et la paroi interne de la nacelle, depuis l'entrée d'air 3 jusqu'à la section de sortie de la nacelle.

Le capot externe 9 est rendu mobile en translation par l'activation de moyens d'actionnement 11. Ces moyens d'actionnement peuvent être constitués par exemple par un ensemble comprenant une pluralité de vérins de commande reliés par une de leurs extrémités à une face amont 10 du capot externe 9.

Le capot externe 9 est apte à se translater le long d'un rail s'inscrivant sur l'îlot 2 du mât réacteur, depuis une position dite de fermeture vers au moins une position d'ouverture, ou inversement.

On se réfère maintenant à la figure 2, illustrant une vue en coupe de la nacelle, en fonctionnement jet direct, centrée sur les sections médiane et aval.

Un capot de soufflante 6 est positionné sur le carter de soufflante 4, entre la face aval 8 de l'entrée d'air 3 et la face amont 10 du capot externe 9, formant une enveloppe.

Cette enveloppe renferme, en fonctionnement jet direct de la nacelle, des grilles de déviation 13 destinées à rediriger au moins une partie dudit flux d'air froid vers l'amont de la nacelle, lorsque lesdites grilles sont découvertes de l'enveloppe, correspondant à un fonctionnement de la nacelle en jet inverse, comme décrit ci-après.

Les grilles de déviation 13 sont supportées classiquement en leur extrémité amont par un cadre avant 12 et en leur extrémité aval par un cadre arrière 14.

Des volets d'inversion de poussée 15 forment, avec les grilles de déviation 14, des moyens d'inversion de poussée de la nacelle 1.

Ces volets 15 sont solidaires du cadre arrière 14 des grilles de déviation 13. En fonctionnement en jet direct de la nacelle, tel que celui représenté sur la figure 2, lesdits volets sont dans une position dite fermée et assurent la continuité aérodynamique interne de la section aval 7 de la nacelle.

Lorsque les grilles sont dans une position fermée, cela permet d'empêcher le déploiement des volets 15 et la redirection de l'air vers l'extérieur de la nacelle.

La figure 3 illustre une position ouverte du capot externe, correspondant ici à un fonctionnement en jet inverse de la nacelle 1.

Dans une telle position, les grilles de déviation 13 et le capot externe 9 sont reculés en aval de la nacelle.

Les grilles de déviation sont en aval de l'enveloppe que forment le capot 6 et le carter 4 de soufflante, devenant ainsi fonctionnelles pour permettre à au moins une partie du flux d'air F traversant la veine V de s'échapper de la nacelle et d'être redirigée vers l'amont de la nacelle.

En fonctionnement en jet inverse de la nacelle, tel que celui représenté sur la figure 3, les volets d'inversion de poussée 15 ont pivoté par rapport au fonctionnement en jet direct de la nacelle. Ces volets sont alors dans une position dite ouverte et obstruent au moins partiellement la veine V de circulation du flux d'air F. Ils contribuent à la redirection d'au moins une partie du flux d'air F à travers les grilles de déviation 13.

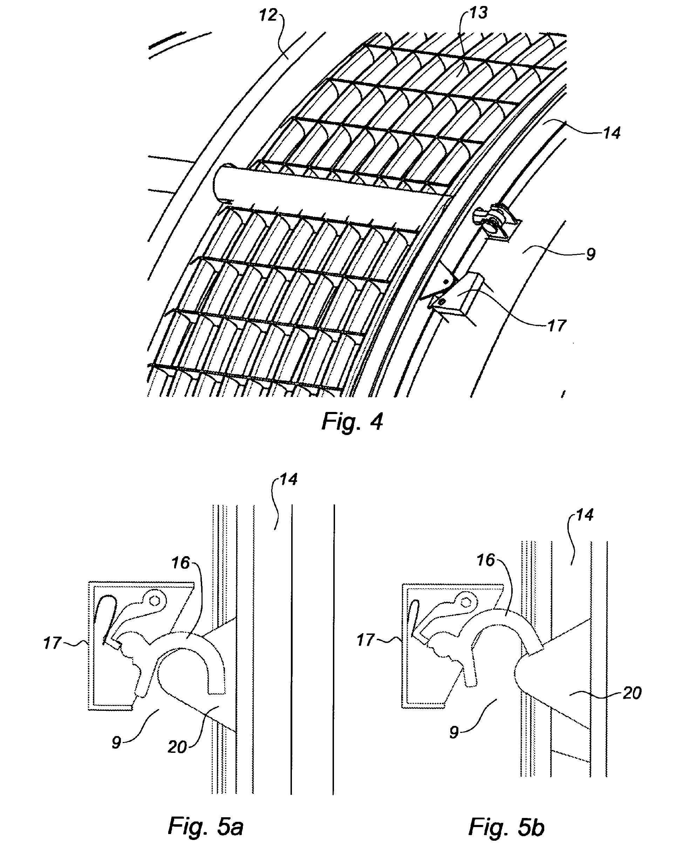

On se réfère maintenant aux figures 4 et 5, illustrant la liaison entre les grilles de déviation 13 et le capot externe 9.

Les grilles de déviation 13 sont rendues solidaires du capot externe 9 par des moyens de fixation 17.

De tels moyens de fixation détachables permettent la liaison entre le cadre arrière 14 des grilles de déviation 13 et le capot externe 9.

Ces moyens de fixation pourront être tout moyen connu, tel que des boulons, des systèmes de verrous, etc.

En se référant à la figure 5a, illustrant la nacelle en mode de fonctionnement, les moyens de fixation 17 sont constitués par au moins un verrou 16 solidaire du capot externe 9 engagé dans un organe récepteur tel qu'une gâche 20, solidaire du cadre arrière 14 des grilles 13.

Les grilles de déviation 13 sont alors solidaires du capot externe 9, capot et grilles formant alors un ensemble unitaire apte à être déplacé de concert lors de l'activation des moyens d'actionnement 11.

Lors d'opérations de maintenance, et comme décrit plus en détails ci-après, un opérateur ouvre manuellement les verrous 16 afin de désolidariser les grilles de déviation du capot externe 9 (figure 5b), permettant alors la translation vers l'aval du seul capot externe 9, dans le but de dégager l'accessibilité à l'intérieur de la nacelle 1.

L'étanchéité entre le cadre arrière 14 des grilles 13 et le capot externe 9 peut être réalisée grâce à un joint d'étanchéité 18 (voir figure 3).

Le mode de fonctionnement de l'inverseur de poussée selon l'invention est le suivant :
Lors d'une phase de vol d'un aéronef, la nacelle 1 est en mode de fonctionnement, par opposition à un mode de maintenance où l'aéronef est au sol.

En mode de fonctionnement de la nacelle, on distingue un fonctionnement en jet direct de ladite nacelle, pour lequel le capot externe 9 est en position de fermeture, et un fonctionnement en jet inverse de la nacelle, pour lequel le capot externe 9 se trouve dans une position d'ouverture.

Lorsque la nacelle est en mode de fonctionnement, les moyens de fixation 17 sont dans une position verrouillée comme décrit précédemment. Les grilles de déviation 13 sont solidaires du capot externe 9.

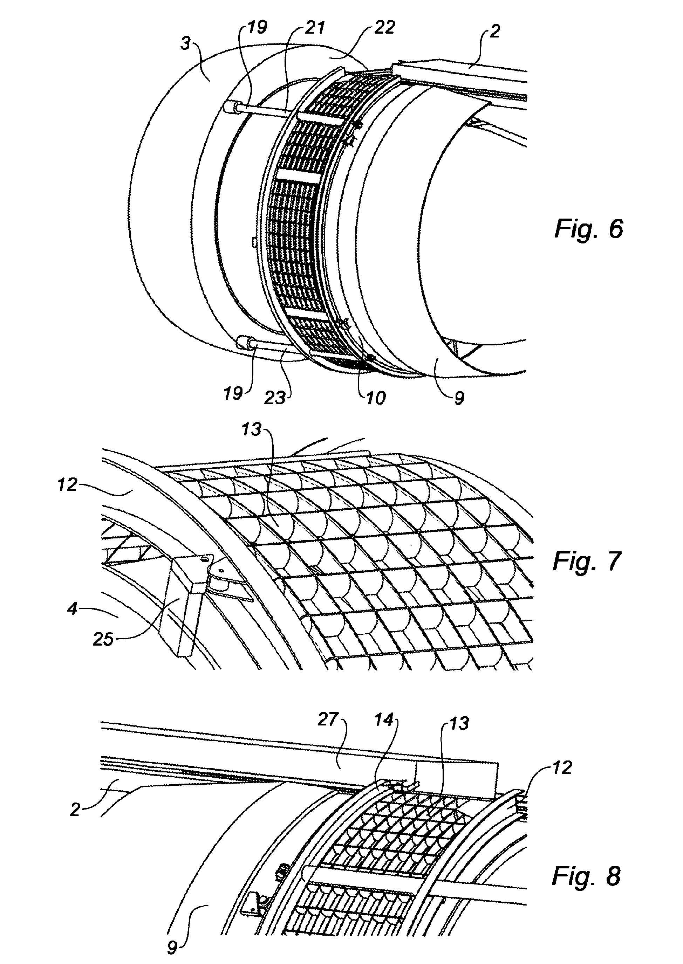

On se réfère à la figure 6 illustrant la nacelle, en mode de fonctionnement, en jet direct.

En fonctionnement jet direct de la nacelle, les grilles de déviation 13 sont renfermées dans l'enveloppe formée par le capot (non représenté) et le carter 4 de soufflante et liées au capot externe 9.

Les moyens d'actionnement 11 comprennent une pluralité de vérins de commande 19 supportés en une de leurs extrémités par la face aval 22 de l'entrée d'air 3 de la nacelle 1, et connectés en l'autre de leurs extrémités à la face amont 10 du capot externe 9. Les vérins peuvent indifféremment être supportés en une de leurs extrémités par le carter de soufflante 4, et connectés en l'autre de leurs extrémités à la face amont du capot externe 9.

Les vérins de commande 19 comprennent des vérins dits supérieurs 21 et des vérins dits inférieurs 23, les termes « supérieur » et « inférieur » devant être compris par référence à l'axe longitudinal de la nacelle 1 lorsque cette dernière est reliée au mât réacteur.

En l'espèce, les vérins de commande 19 sont au nombre de quatre, à savoir deux vérins supérieurs 21 situés à proximité de l'îlot 2 du mât réacteur, et deux vérins inférieurs 23 en zone située à l'opposé, mais le nombre de vérins et leur disposition peuvent bien entendu être différents.

Afin de passer d'une position jet direct à une position jet inverse, il est nécessaire d'activer les moyens d'actionnement 11.

L'activation de ces moyens est réalisée par l'intermédiaire d'une source de commande unique non représentée, reliée à la fois aux vérins supérieurs 21 et aux vérins inférieurs 23.

Les vérins de commande 19 s'étirent sous l'action de la source de commande, ce qui entraîne le déplacement du capot externe 9 vers l'aval de la nacelle 1. Le capot externe 9 est solidaire des grilles de déviation 13 grâce aux moyens de fixation 17, ce qui a pour effet d'entraîner, de concert, l'ensemble unitaire formé par le capot externe et les grilles de déviation.

Les grilles de déviation 13 sont alors découvertes et les volets 15 sont ouverts, obstruant au moins partiellement la veine V de circulation du flux d'air.

Les figures 7 et 8 illustrent la liaison des grilles de déviation 13 avec un ensemble fixe de la nacelle.

En fonctionnement jet direct de la nacelle, il est crucial qu'un mouvement de coulissement des grilles de déviation 13 vers l'aval de la nacelle 1 ne puisse pas se produire de manière inopinée : une telle ouverture serait en effet dangereuse en phase de vol.

Pour ces raisons, des verrous de sécurité 25 sont prévus à différents endroits de la nacelle pour bloquer l'ouverture non souhaitée du capot externe 9 solidaire des grilles 13.

Il s'agit typiquement d'un verrou composé d'un corps fixe et d'un pêne apte à coopérer avec une gâche.

De tels moyens de verrouillage sont prévus entre le cadre avant 12 des grilles de déviation 13 et le carter de soufflante 4.

On peut également prévoir des moyens de verrouillage entre le cadre arrière 14 des grilles 13 et le mât réacteur 27 reliant la nacelle 1 à une aile (non représentée).

Lorsqu'on souhaite actionner l'inversion de poussée, lors de l'atterrissage d'un aéronef par exemple, on commande le déverrouillage des verrous de sécurité 25.

Des sources de puissance et de commande indépendantes sont prévues pour ces verrous, de manière à accroître la fiabilité du dispositif de sécurité.

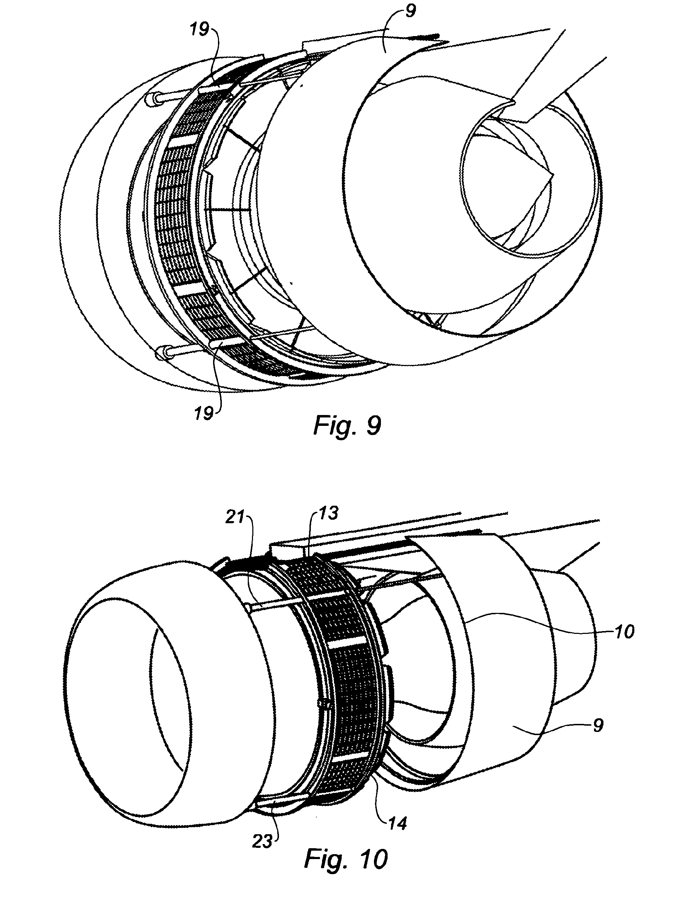

On se réfère maintenant à la figure 9, illustrant un premier mode de réalisation d'une position de maintenance de la nacelle 1 selon l'invention.

Afin de réaliser la maintenance du moteur, il est nécessaire d'avoir un accès aisé audit moteur. Pour cela, l'ensemble de vérins de commande 19 sont supportés en une de leurs extrémités par la face aval 22 de l'entrée d'air 3 de la nacelle 1, et connectés en l'autre de leurs extrémités à la face amont 10 du capot externe 9.

Les grilles de déviation sont désolidarisées du capot externe par ouverture manuelle des moyens de fixation 17, ce qui permet, lors de l'activation des moyens d'actionnement par l'intermédiaire d'un système de commande unique non représenté, l'ouverture du capot seul, les grilles restant en position identique à celle lors du fonctionnement de la nacelle en jet direct.

Un tel système de commande peut être celui utilisé lors du déploiement du capot d'inverseur lorsque la nacelle est en fonctionnement, mais peut également être réalisé par tous moyens, tels qu'une source électrique externe ou une source mécanique externe par exemple.

Le capot externe se trouve alors dans une position aval, permettant ainsi un accès aisé au moteur.

L'ouverture des moyens de fixation se fait manuellement, mais il n'est pas exclu de prévoir tout système de commande permettant une ouverture automatisée de ces moyens de fixation 17.

Les moyens de verrouillage 25 entre les grilles de déviation et les ensembles fixes de la nacelle restent en position de fermeture. Ceci permet de ne pas avoir à les manipuler lors d'opérations de maintenance.

Lors de la fermeture du capot externe, les moyens de fixation 17 entre le capot et les grilles de déviation sont aptes à se refermer automatiquement.

Selon un deuxième mode de réalisation d'une position de maintenance de la nacelle 1 selon l'invention, uniquement les vérins supérieurs 23 sont reliés à la face amont 10 du capot externe 9, tel qu'illustré à la figure 10.

Les vérins inférieurs 23 sont connectés au cadre arrière 14 des grilles de déviation 13, le système de commande de l'ensemble de vérins restant quant à lui relié aux vérins inférieurs 23 et supérieurs 21.

Selon l'invention, un dispositif d'embrayage permet de découpler momentanément les vérins inférieurs 23 du système de commande unique, ce qui permet, lors de l'activation des moyens d'actionnement 19, d'entraîner le déplacement seulement des vérins supérieurs 21 connectés au capot externe 9.

La translation du capot externe 9 vers l'aval de la nacelle est alors réalisée par les seuls vérins supérieurs 21, suffisamment résistants mécaniquement lors d'opérations de maintenance.

Grâce à une telle disposition, l'accès au moteur est considérablement amélioré, son accès étant uniquement restreint par les vérins supérieurs 21.

Un des avantages de ce mode alternatif est qu'il est réalisable, d'une part, sans intervention au préalable d'un opérateur sur la nacelle et, d'autre part, sans rajouter de système de commande de l'ensemble de vérins par rapport au mode de fonctionnement décrit précédemment. Ceci permet également par conséquent de réduire le poids de la nacelle.

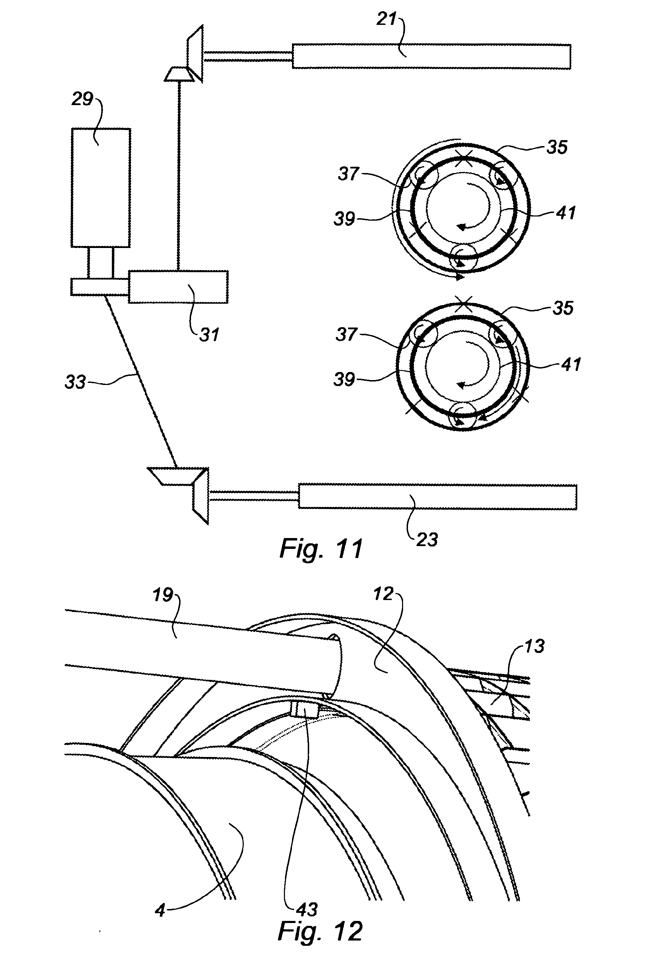

Le dispositif d'embrayage est détaillé en figure 11, illustrant le système de commande (référencé 29 sur la figure 11) de l'ensemble de vérins 19, relié d'une part à un train épicycloïdal 31 et d'autre part au flexible de commande 33 des vérins inférieurs 23.

Le train épicycloïdal 31 comprend typiquement un planétaire extérieur (couronne) 35, des satellites 37 supportés par un porte-satellites 39, lesdits satellites engrenant à la fois sur le planétaire extérieur 35 et sur un planétaire intérieur (pignon central) 41.

En mode de fonctionnement de la nacelle, le déplacement du capot externe 9 nécessite l'activation des vérins supérieurs 21 et inférieurs 23. Le système de commande, par exemple un moteur, est connecté à la couronne 35 du train épicycloïdal 31 et au flexible de commande 33 des vérins inférieurs 23. Les vérins inférieurs 23 et supérieurs 21 sont entraînés en translation lorsque les vérins inférieurs sont solidaires du capot d'inverseur 9.

En position de maintenance, les vérins inférieurs 23 sont connectés au cadre arrière des grilles de déviation 13, verrouillée par rapport aux parties fixes par les moyens de verrouillage 25 ce qui empêche la rotation du planétaire extérieur 35. Le système de commande 33 est relié au porte-satellites 39 qui, lors de l'activation du système de commande 33, entraînera en rotation le planétaire intérieur 41 connecté aux vérins supérieurs 21.

On se réfère maintenant à la figure 12, illustrant une caractéristique de l'invention selon laquelle des butées axiales 43 sont fixées entre le carter de soufflante 4 et le cadre avant 12, à diverses positions angulaires.

Ces butées 43 permettent de réaliser la fin de course de l'ensemble mobile en jet inverse, les vérins 19 ne pouvant pas intégrer ces butées sous peine de ne pouvoir réaliser ensuite la course nécessaire à la position de maintenance, ladite course étant supérieure à celle nécessaire pour passer d'une position fermée à une position ouverte du capot externe lors d'un fonctionnement en jet inverse de la nacelle.

De façon avantageuse, lors d'un fonctionnement en jet inverse de la nacelle, les efforts axiaux induits par les grilles de déviation 13, les volets 15 et le capot externe 9 sont transmis directement aux ensembles fixes de la nacelle sans passer par les vérins 19, et peuvent ainsi être mieux répartis angulairement de façon à limiter les concentrations de contraintes dans la structure.

Grâce à la présente l'invention, on dispose d'une nacelle présentant à la fois les avantages liés aux nacelles dites courtes, très avantageuses en terme de réduction de poids, mais aussi présentant des avantages concernant l'accessibilité au moteur lors d'opérations de maintenance.

Grâce à l'inverseur de poussée selon l'invention, il n'est plus nécessaire de désactiver les verrous de sécurité entre les grilles de déviation et les ensembles fixes de la nacelle, et l'accès au moteur est d'autant plus facilité grâce aux vérins inférieurs découplés du système de commande en position de maintenance.

Comme il va de soi, l'invention ne se limite pas aux seules formes de réalisation de cet inverseur de poussée et de cette nacelle, décrites ci-dessus à titre d'exemples, mais elle embrasse au contraire toutes les variantes.

## Revendications

1. Inverseur de poussée pour nacelle (1) de turboréacteur comprenant :
- au moins un capot externe (9) mobile en translation depuis une position dite de fermeture vers au moins une position dite d'ouverture,
- des moyens d'actionnement (11) comprenant un ensemble de vérins de commande (19) dont l'extrémité d'au moins un vérin est solidaire du capot externe (9),
- des moyens d'inversion de poussée comprenant au moins des grilles de déviation (13) supportées en leur extrémité amont par un cadre amont (12) et en leur extrémité aval par un cadre aval (14), et renfermées dans une enveloppe formée par un carter de soufflante (4) et par un capot de soufflante (6),
- des moyens de fixation (17) desdites grilles de déviation (13) sur le capot externe (9), lesdits moyens pouvant être verrouillés/ déverrouillés,
ledit inverseur de poussée étant **caractérisé en ce que** l'activation des moyens d'actionnement (11) entraîne l'ouverture/ fermeture du capot externe (9), permettant un déplacement de concert du capot externe (9) et des grilles de déviation (13) lorsque les moyens de fixation (17) sont verrouillés, et un déplacement du seul capot externe (9) lorsque les moyens de fixation (17) sont déverrouillés.

2. Inverseur de poussée selon la revendication 1, **caractérisé en ce que** l'ensemble de vérins de commande (19) est activé par une source de commande (29) unique.

3. Inverseur de poussée selon l'une quelconque des revendications 1 ou 2, **caractérisé en ce que** l'ensemble de vérins de commande (19) comprend au moins un vérin dit supérieur (21) et au moins un vérin dit inférieur (23).

4. Inverseur de poussée selon la revendication 3, **caractérisé en ce qu'**au moins les vérins supérieurs (21) sont connectés par une de leurs extrémités à la face amont (10) du capot externe (9).

5. Inverseur de poussée selon la revendication 3, **caractérisé en ce que** les vérins supérieurs (21) et les vérins inférieurs (23) sont connectés par une de leurs extrémités à la face amont (10) du capot externe (9).

6. Inverseur de poussée selon la revendication 3 ou 4, **caractérisé en ce que** les vérins inférieurs (23) sont connectés par une de leurs extrémités au cadre arrière (14) des grilles de déviation (13).

7. Inverseur de poussée selon l'une quelconque des revendications 3, 4 ou 6, **caractérisé en ce que** les vérins inférieurs (23) sont aptes à être découplés de la source de commande grâce à un dispositif d'embrayage.

8. Inverseur de poussée selon l'une quelconque des revendications 1 à 7, **caractérisé en ce que** les moyens de fixation (17) comprennent au moins un verrou (16) solidaire du capot externe (9) et au moins un organe récepteur (20) desdits verrous, solidaire des grilles de déviation (13).

9. Inverseur de poussée selon l'une quelconque des revendications 1 à 8, **caractérisé en ce que** les grilles de déviation (13) sont, par l'intermédiaire de verrous de sécurité (25), solidaires d'au moins un ensemble fixe de la nacelle (1) et/ou de l'interface de liaison (2) avec le mât réacteur (27) auquel est destinée à être rattachée ladite nacelle.

10. Inverseur de poussée selon l'une quelconque des revendications 1 à 9, **caractérisé en ce que** des butées axiales (43) sont fixées entre le cadre avant (12) des grilles de déviation (13) et l'ensemble fixe de la nacelle (1).

11. Nacelle (1) pour turboréacteur d'aéronef, **caractérisée en ce qu'**elle comprend au moins un inverseur de poussée selon l'une quelconque des revendications 1 à 9.

## Patentansprüche

1. Schubumkehrer für Gondel (1) eines Turbinenstrahltriebwerks, die Folgendes umfasst:
- mindestens eine externe Haube (9), die in Verschiebung ausgehend von einer sogenannten Verschlussposition zu mindestens einer sogenannten Öffnungsposition beweglich ist,
- Betätigungsmittel (11), die eine Einheit von Steuerzylindern (19) umfassen, wobei das Ende mindestens eines Zylinders fest mit der externen Haube (9) verbunden ist,
- Schubumkehrmittel, die mindestens Ablenkgitter (13) umfassen, die an ihrem stromaufwärtigen Ende von einem stromaufwärtigen Rahmen (12) und an ihrem stromabwärtigen Ende von einem stromabwärtigen Rahmen (14) getragen und in einem Mantel, der von einer Gebläseverkleidung (4) und einer Gebläsehaube (6) gebildet ist, eingeschlossen sind,
- Befestigungsmittel (17) der Ablenkgitter (13) auf der externen Haube (9), wobei die Mittel verriegelt/entriegelt werden können,
Schubumkehrer **dadurch gekennzeichnet, dass** die Aktivierung der Betätigungsmittel (11) das Öffnen/Schließen der externen Haube (9) bewirkt, was eine gleichzeitige Verlagerung der externen Haube (9) und der Ablenkgitter (13) erlaubt, wenn die Befestigungsmittel (17) verriegelt sind, und eine Verlagerung nur der externen Haube (9), wenn die Befestigungsmittel (17) entriegelt sind.

2. Schubumkehrer nach Anspruch 1, **dadurch gekennzeichnet, dass** die Einheit von Steuerzylindern (19) durch eine einzige Steuerquelle (29) aktiviert wird.

3. Schubumkehrer nach einem der Ansprüche 1 oder 2, **dadurch gekennzeichnet, dass** die Einheit von Steuerzylindern (19) mindestens einen oberer genannten Zylinder (21) und mindestens einen unterer genannten Zylinder (23) umfasst.

4. Schubumkehrer nach Anspruch 3, **dadurch gekennzeichnet, dass** mindestens die oberen Zylinder (21) durch eines ihrer Enden an der stromaufwärtigen Seite (10) der externen Haube (9) verbunden sind.

5. Schubumkehrer nach Anspruch 3, **dadurch gekennzeichnet, dass** die oberen Zylinder (21) und die unteren Zylinder (23) durch eines ihrer Enden mit der stromaufwärtigen Seite (10) der externen Haube (9) verbunden sind.

6. Schubumkehrer nach einem der Ansprüche 3 oder 4, **dadurch gekennzeichnet, dass** die unteren Zylinder (23) durch eines ihrer Enden mit dem hinteren Rahmen (14) der Ablenkgitter (13) verbunden sind.

7. Schubumkehrer nach einem der Ansprüche 3, 4 oder 6, **dadurch gekennzeichnet, dass** die unteren Zylinder (23) angepasst sind, um von der Steuerquelle dank einer Kopplungsvorrichtung abgekoppelt zu werden.

8. Schubumkehrer nach einem der Ansprüche 1 bis 7, **dadurch gekennzeichnet, dass** die Befestigungsmittel (17) mindestens einen Riegel (16), der fest mit der externen Haube (9) verbunden ist, und mindestens ein Aufnahmeorgan (20) der Riegel, das fest mit den Ablenkgitter (13) verbunden ist, umfassen.

9. Schubumkehrer nach einem der Ansprüche 1 bis 8, **dadurch gekennzeichnet, dass** die Ablenkgitter (13) über Sicherheitsriegel (25) mit mindestens einer stationären Einheit der Gondel (1) und/oder der Verbindungsschnittstelle (2) mit dem Triebwerkmast (27), an dem die Gondel befestigt werden soll, fest verbunden sind.

10. Schubumkehrer nach einem der Ansprüche 1 bis 9, **dadurch gekennzeichnet, dass** axiale Anschläge (43) zwischen dem vorderen Rahmen (12) der Ablenkgitter (13) und der stationären Einheit der Gondel (1) befestigt sind.

11. Gondel (1) für Luftfahrzeug-Turbinenstrahlwerk, **dadurch gekennzeichnet, dass** sie mindestens einen Schubumkehrer nach einem der Ansprüche 1 bis 9 umfasst.

## Claims

1. A thrust reverser for a turbojet nacelle (1) comprising:
- at least one mobile external cowl (9) in translation from a position called closure position to at least a position called opening position,
- actuating means (11) comprising a set of control cylinders (19), of which the end at least one jack is secured to the outer cover (9),
- thrust reversal means comprising at least deflecting cascades (13) supported in their upstream end by an upstream frame (12) and in their downstream end by a downstream frame (14), and enclosed in an envelope formed by a fan casing (4) and by a fan cowl (6),
- means (17) for fixing said deflecting cascades (13) on the external cowl (9), said means being able to be locked/unlocked,
said thrust reverser being **characterized in that** the activation of the actuating means (11) causes the opening/closing of the external cowl (9), allowing a displacement of the external cowl (9) and of the deflecting cascades (13) together when the fixing means (17) are locked, and a displacement of the single external cowl (9) when the fixing means (17) are unlocked.

2. The thrust reverser according to claim 1, **characterized in that** the set of control cylinders (19) is activated by a single control source (29).

3. The thrust reverser according to any one of claims 1 or 2, **characterized in that** the set of control cylinders (19) comprises at least one cylinder called higher cylinder (21) and at least one cylinder called lower cylinder (23).

4. The thrust reverser according to claim 3, **characterized in that** at least the higher cylinders (21) are connected by one of their ends to the upstream face (10) of the external cowl (9).

5. The thrust reverser according to claim 3, **characterized in that** the higher cylinders (21) and the lower cylinders (23) are connected by one of their ends to the upstream face (10) of the external cowl (9).

6. The thrust reverser according to claim 3 or 4, **characterized in that** the lower cylinders (23) are connected by one of their ends to the rear frame (14) of the deflecting cascades (13).

7. The thrust reverser according to any one of the claims 3, 4 or 6, **characterized in that** the lower cylinders (23) are able to be disconnected from the control source through a clutch device.

8. The thrust reverser according to any one of claims 1 to 7, **characterized in that** the fixing means (17) comprise at least one lock (16) secured to the external cowl (9) and at least one receiving member (20) of said locks, secured to the deflecting cascades (13).

9. The thrust reverser according to any one of claims 1 to 8, **characterized in that** deflecting cascades (13) are, by means of security locks (25), secured to at least one fixed set of the nacelle (1) and/or to the connection interface (2) with the engine pylon (27) to which said nacelle is intended to be fastened.

10. The thrust reverser according to any one of claims 1 to 9, **characterized in that** the axial abutments (43) are fixed between the front frame (12) of the deflecting cascades (13) and the fixed set of the nacelle (1).

11. A nacelle (1) for a turbojet aircraft, **characterized in that** it comprises at least one thrust reverser according to any one of claims 1 to 9.
